# EUROPÄISCHE PATENTSCHRIFT

(11) **EP 1 195 617 B1**
(45) Veröffentlichungstag und Bekanntmachung des Hinweises auf die Patenterteilung: **15.09.2010**
(21) Anmeldenummer: 01123975.3
(22) Anmeldetag: 08.10.2001
(51) Int. Cl.: G01S 7/481, G01S 17/10

(54) **Entfernungsmessgerät**
Distance measuring device
Dispositif de mesure de distance

(30) Priorität: 06.10.2000 CH 19732000
(43) Veröffentlichungstag der Anmeldung: 10.04.2002
(73) Patentinhaber: Leica Geosystems AG, 9435 Heerbrugg (CH)
(72) Erfinder: Giger, Kurt, 9464 Rüthi (CH)
(74) Vertreter: Kaminski, Susanne

(56) Entgegenhaltungen:
- DE-A- 19 643 287
- DE-C- 4 305 195
- US-A- 4 111 552
- US-A- 5 825 473
- US-A- 5 949 530
- US-A- 5 949 531
- PATENT ABSTRACTS OF JAPAN vol. 013, no. 198 (E-756), 11. Mai 1989 (1989-05-11) & JP 01 020679 A (TOSHIBA CORP), 24. Januar 1989 (1989-01-24)

## Beschreibung

Die Erfindung betrifft ein Entfernungsmessgerät nach dem Oberbegriff des Anspruchs 1.

Entfernungsmessgeräte - beispielsweise als handgehaltene Entfernungsmessgeräte hinlänglich bekannt - weisen einen Entfernungsmessbereich von zum Beispiel einigen zehn Metern bei einer erzielbaren Genauigkeit im Millimeterbereich auf. Sie werden hauptsächlich in der Bauvermessung oder im Innenausbau, beispielsweise zum dreidimensionalen Vermessen von Räumen, eingesetzt. Weitere Anwendungsbereiche für Entfernungsmessgeräte sind die geodätische und die industrielle Vermessung.

Das Grundprinzip der Entfernungsmessung mit den bekannten Entfernungsmessgeräten beruht auf der Auswertung einer zeitlichen Veränderung einer Kenngrösse eines vom Gerät auf ein Objekt gerichteten Messstrahls und des am Objekt gestreut bzw. gerichtet reflektierten Messstrahls. Das Entfernungsmessgerät ist dazu in der Regel mit einer Lichtquelle zum Erzeugen eines intensitätsmodulierten Sendestrahls ausgestattet. Bei Handgeräten handelt es sich dabei vornehmlich um eine optische Strahlung im sichtbaren Wellenlängenspektrum, um das Anvisieren der Messpunkte zu erleichtern. Der reflektierte Messstrahl wird von einem in das Entfernungsmessgeräten eingebauten Empfänger empfangen. Aus der zeitlichen Verzögerung des reflektierten Messstrahls gegenüber dem auf das Objekt gerichteten Messstrahl bestimmt die Entfernung zum Objekt.

Als Empfänger kommen in den bekannten Entfernungsmessgeräten üblicherweise PIN-Photodioden oder Avalanche-Photodioden zur Wandlung des vom Objekt gestreut oder gerichtet reflektierten Messstrahls in elektrische Empfangssignale zum Einsatz. Sehr gebräuchlich sind Entfernungsmessgeräte, deren Entferungsbestimmung auf dem Messprinzip der relativen Phasenmessung beruht. Bei derartigen Geräten werden elektrische, den reflektierten Messstrahl bzw. einem Referenzstrahl zugeordnete Empfangssignale direkt in Avalanche-Photodioden oder in Frequenzmischern mit einer Steuerfrequenz zu niederfrequenten, zugeordneten Messsignalen heruntergemischt. Für diese wird dann die jeweilige Phasenlage bestimmt. Die relative Phasenlage der zugeordneten Messsignale relativ zueinander ist ein Mass für die Entfernung des Messobjekts.

Bei der angestrebten Messgenauigkeit im Millimeterbereich muss die Verzögerung des Messstrahls auf einige Picosekunden genau gemessen werden. Zur Erzeugung eines Referenzstrahls wird daher der von einer Lichtquelle erzeugte, intensitätsmodulierte Sendestrahl in den auf das Objekt gerichteten Messstrahl und in den Referenzstrahl aufgeteilt. Dadurch können die Einflüsse von instabilen Verzögerungen in der Lichtquelle und in der Modulationselektronik weitgehend ausgeschaltet werden. Der Referenzstrahl durchläuft im allgemeinen innerhalb des Geräts eine Referenzstrecke von bekannter Länge, bevor er in einem Empfänger in elektrische Empfängersignale umgewandelt wird. Dabei entspricht der Empfänger für den Referenzstrahl dem Empfänger für den vom Messobjekt gestreut bzw. gerichtet reflektierten Messstrahl. Es kann auch nur ein Empfänger vorgesehen sein, der abwechselnd den Referenzstrahl oder den reflektierten Messstrahl empfängt und in entsprechende elektrische Messsignale umformt.

Die Erzeugung des Referenzstrahls erfolgt durch einen Strahlteiler, der im Strahlengang des von der Lichtquelle erzeugten Sendestrahls angeordnet ist. Der Strahlteiler wird beispielsweise von einem Spiegel gebildet, der motorisch periodisch in den Strahlengang eingeschwenkt wird, um den erzeugten Sendestrahl in Richtung der Referenzstrecke abzulenken.

Meist kommen teildurchlässige Spiegel als Strahlteiler zum Einsatz, die permanent im Strahlengang des Sendestrahls angeordnet sind. Der teildurchlässige Spiegel lenkt permanent einen bestimmten Anteil des Sendestrahls als Referenzstrahl in Richtung der Referenzstrecke.

In der DE-A-196 43 287 sind beispielsweise zwei Varianten einer derartigen Strahlaufteilung beschrieben. Diese unterscheiden sich dadurch, dass im einen Ausführungsbeispiel für den Messstrahl und für den Referenzstrahl jeweils eigene Empfänger vorgesehen sind, deren elektrische Signale sequentiell oder gleichzeitig erfasst werden. Im zweiten Ausführungsbeispiel werden der vom Messobjekt kommende Messstrahl und der Referenzstrahl abwechselnd auf denselben Empfänger geleitet. Die periodische Umschaltung erfolgt durch im Referenzstrahlengang und im Messstrahlengang angeordnete, motorisch betätigbare, gekoppelte Blenden, die entweder den einen oder den anderen Strahl blockieren. Die angestrebte Messgenauigkeit erfordert eine hohe Güte der eingesetzten Teilerplatte und gleichzeitig einen entsprechend grossen Fertigungs- bzw. Montageaufwand.

Die Grenzflächen eines als teildurchlässiger Spiegel ausgebildeten Strahlteilers stellen eine zusätzliche Quelle unerwünschter Reflexionen dar. Um die geforderten Genauigkeiten bei der Entfernungsmessung zu erhalten, müssen diese durch aufwändige Abschirmmassnahmen unterdrückt werden.

Zudem weist ein Sendestrahl, der von einer in der Regel als Laserdiode ausgebildeten Lichtquelle erzeugt wird, zeitlich sich verändernde Strahlteile mit jeweils unterschiedlichen Polarisationsrichtungen auf. Diese Strahlanteile ändern sich auch mit der Betriebstemperatur und dem Alter der Laserdiode. Da aber das Reflexionsvermögen eines sich schräg im Sendestrahl befindenden, teildurchlässigen Spiegels in der Regel auch von der Polarisationsrichtung der Strahlung des Sendestrahls bestimmt wird, erfolgt die Aufteilung des Sendestrahls in den auf ein Messobjekt gerichteten Messstrahl und den Referenzstrahl polarisationsgewichtet.

Dies führt zu einer zeitlichen Änderung der Strahleigenschaften des Referenzstrahls im Verhältnis zu den Strahleigenschaften des auf das Objekt gerichteten Messstrahls, die sich negativ auf die zu erzielende Genauigkeit der Bestimmung der Entfernung auswirkt.

Das Dokument "PATENT ABSTRACTS OF JAPAN", Band 013, Nr. 198 (E-756), 11. Mai 1989, sowie die JP 01 020679 A offenbaren einen Aufbau eines Laserresonator in einem Gehäuse, wobei der Output-Strahl überwacht werden soll. Dazu wird der generierte Laserstrahl mittels eines Spiegels umgelenkt. Dieser Strahl breitet sich durch ein Gehäusefester, das schräg zu einer senkrecht zur Strahlachse angeordneten Ebene ausgerichtet ist, nach aussen aus, wobei das Fenster leicht reflektierend ausgebildet ist.

Die DE 43 05 195 C offenbart einen Fotodetektor mit einem Lichtsender und einem Lichtempfänger, wobei ein Teil des vom Lichtsender ausgehenden Lichts direkt auf den Lichtempfänger gekoppelt ist.

Ferner offenbart die US 4,111,552 einen Entfernungsmesser, bei dem ein Sendestrahl mittels eines kippbaren Spiegels in Richtung eines Referenzempfängers geleitet werden kann. Die Laufzeiten für die Referenzstrecke und für die Messstrecke werden dabei nacheinander gemessen.

Die Erfindung hat sich die Aufgabe gestellt, Mängel des Standes der Technik zu beheben. So sollen bei dem Entfernungsmessgerät der Referenzstrahl und der Messstrahl ein im wesentlichen zeitlich konstantes Verhältnis der jeweiligen Strahleigenschaften zueinander aufweisen, bei gleichzeitig reduziertem Aufwand für die baulichen Massnahmen.

Dies gelingt durch die Verwirklichung der kennzeichnenden Merkmale des Anspruchs 1. Alternative bzw. vorteilhafte Ausbildungen der Erfindung sind in den Kennzeichen der abhängigen Ansprüche aufgeführt.

Wie bei herkömmlichen Entfernungsmessern weist ein erfindungsgemässer, elektrooptischer Entfernungsmesser eine Lichtquelle zum Erzeugen eines Sendestrahls, einen Strahlteiler zum Aufteilen des Sendestrahls in einen Referenzstrahl und in einen auf ein Messobjekt gerichteten Messstrahl, einem Referenzempfänger zum Empfangen des Referenzstrahls, wobei zwischen dem Strahlteiler und dem Referenzempfänger ein Referenzstrahlgang mit einer Referenzstrecke bekannter Länge definiert ist, einem Messempfänger zum Empfangen des am Objekt gestreut oder gerichtet reflektierten Messstrahls eine Auswerteeinheit zum Bestimmen der Entfernung aus im Empfänger verfügbaren, dem reflektierten Messstrahl zugeordneten Messsignalen und im Referenzempfänger verfügbaren, dem Referenzstrahl zugeordneten Referenzmesssignalen, sodass auf die Entfernungsmessgenauigkeit negativ wirkende Einflüsse von instabilen Verzögerungen in der Lichtquelle verringerbar sind, sowie ein Gerätegehäuse, in dem die voranstehend aufgeführten Baugruppen angeordnet sind, auf. Dieses Gerätegehäuse weist ein Durchtrittsfenster für den auf das Messobjekt gerichteten Messstrahl sowie eine Empfangsoptik für den reflektierten Messstrahl auf. Im Gegensatz zum Stand der Technik bildet gemäss der Erfindung der Strahlteiler im Strahlengang des Sendestrahls zugleich auch das Durchtrittsfenster des Gerätegehäuses des Entfernungsmessers.

Die erfindungsgemässe Kombination der Funktion des Durchtrittsfensters des Gerätegehäuses und der Funktion des Strahlteilers für das Aufteilen des Sendestrahls in den Referenzstrahl und den gerichteten Messstrahl, die üblicherweise durch einen eigenen, teildurchlässigen Spiegel erfüllt wird, wirkt sich in mehrfacher Weise positiv aus.

Es ergibt sich ein deutlich vereinfachter Aufbau des Entfernungsmessgeräts, da anstelle zweier optischer Elemente ein einziges vorgesehen wird. Daraus resultiert einerseits ein reduzierter Fertigungs- und Montageaufwand und andererseits wird ein - weiterer - Schritt in Richtung einer vollautomatisierten Montage von Entfernungsmessern der gattungsgemässen Art ermöglicht. Die mit der Verringerung der optischen Elemente verbundene Reduktion der optischen Grenzflächen führt andererseits auch zu einer Reduzierung der Quellen von unerwünschten, die Messgenauigkeit negativ beeinflussenden Reflexionen. Dadurch verursachte, zusätzliche, aufwändige Abschirmmassnahmen können bei einem erfindungsgemässen Entfernungsmesser entfallen. Im Gegensatz dazu macht sich die Erfindung gerade die Reflexionen am Durchtrittsfenster zu Nutze, indem sie diese gezielt in Richtung der Referenzstrecke ablenkt und derart den Referenzstrahl erzeugt. Durch den reduzierter Fertigungs- und Montageaufwand sowie die nicht notwendigen Abschirmmassnahmen sind erfindungsgemässe Entfernungsmessgeräte auch wirtschaftlicher herstellbar.

Durch die Wahl eines spitzen Einfallswinkels und bei gleichzeitiger Einstückigkeit des Strahlteiler-Durchtrittsfensters können weitere Nachteile des Standes der Technik behoben werden.

Bei gegebenen geometrischen Verhältnissen für die Position der für die Erzeugung des Sendestrahls vorgesehene Lichtquelle, des Empfängers für den Referenzstrahl und des Durchtrittsfensters für den auf das Objekt gerichteten Messstrahl sowie einer Referenzstrecke direkt vom Strahlteiler zum Empfänger, kann der Einfallswinkel minimiert werden, indem der Strahlteiler in Richtung zum Durchtrittsfensters verschoben wird. Dadurch, dass der Strahlteiler gleichzeitig als Durchtrittsfenster dient, wird es möglich, den Einfallswinkel bei gegebenen geometrischen Verhältnissen in Bezug auf die unterschiedliche Polarität der jeweiligen Strahlanteile zu optimieren.

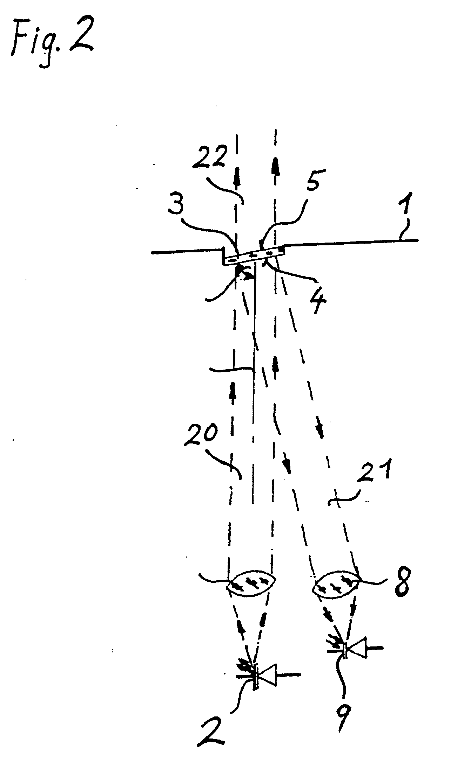

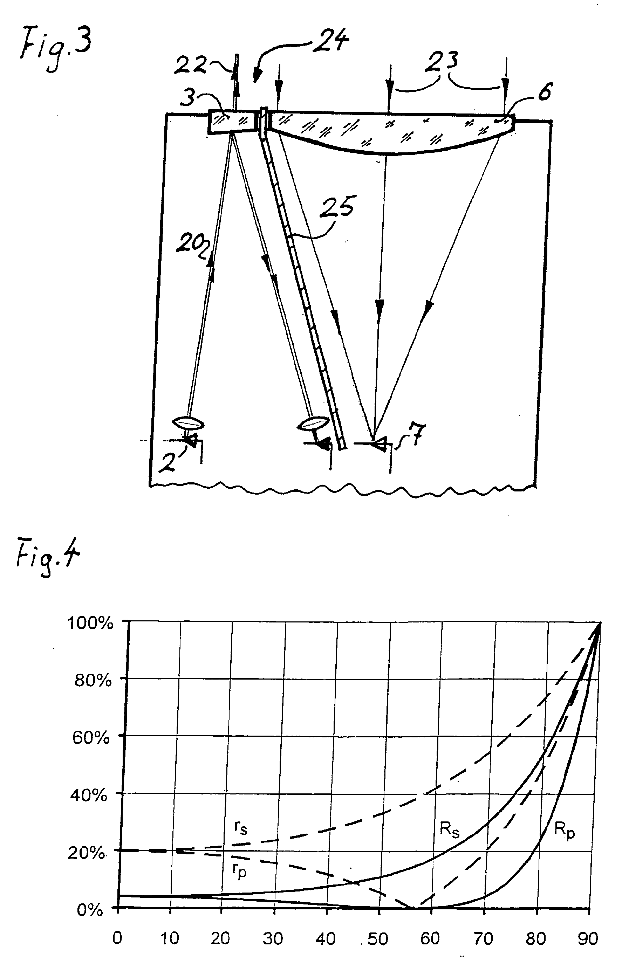

Figur 4, die die Abbildung 2.28 auf Seite 65 aus "Technische Optik in der Praxis / Gerd Litfin: Springer Verlag (ISBN 3-540-60613-0 Springer Verlag Berlin Heidelberg New York)" wiedergibt, stellt den Betrag des Reflexionsvermögens (r, R) beim Übergang von Luft nach Glas mit einem Brechungsindex von 1,5 für linear polarisiertes Licht, dessen Polarisationsrichtung parallel (rₚ, Rₚ) bzw. senkrecht (rₛ, Rₛ) zur Einfallsebene steht, in Abhängigkeit vom Einfallswinkels (°) dar. Daraus ist zu ersehen, dass der Unterschied des Reflexionsvermögens von senkrecht bzw. parallel zur Einfallsebene polarisiertem Licht an einer solchen Grenzfläche um so geringer ausfällt, je spitzer der jeweilige Einfallswinkel gewählt wird.

Das Ergebnis sind ein Referenzstrahl und ein auf das Objekt gerichteter Messstrahl, welche im wesentlichen unabhängig von momentanen Strahlanteilen unterschiedlicher Polarität, im wesentlichen ein konstantes Verhältnis der Strahleigenschaften zueinander aufweisen. Dieses konstante Verhältnis ermöglicht eine Verbesserung der Messgenauigkeit.

Indem der Sendestrahl erfindungsgemäss erst unmittelbar beim Durchtrittsfenster in den Referenzstrahl und den Messstrahl aufgeteilt wird, werden diese in gleichem Ausmass von gewissen Geräteparametern beeinflusst. Dies beeinflusst weiters die zu erzielende Messgenauigkeit positiv.

Im Gegensatz zum vorhergehend erwähnten Stand der Technik kann sich eine erfindungsgemäss ausgebildete direkte Referenzstrecke von einem permanent auf der Strahlachse des Sendestrahls positionierten Strahlteiler direkt zu einem Empfänger des Referenzstrahls erstrecken und braucht damit insbesondere keinen Umlenkspiegel, keine Glasfasern, usw. für ein Falten des Strahlengangs des Referenzstrahls aufzuweisen, da der Ablenkwinkel des Referenzstrahles grösser 90° ist.

Die Aufteilung des Sendestrahls kann erfindungsgemäss sowohl an der dem Innern des Gerätegehäuses zugewandten Eintrittsfläche des Strahlteilers, an der dem Äussern des Gerätegehäuses zugewandten Austrittsfläche des Strahlteilers oder auch an einer gegebenenfalls dazwischen liegenden, strahlteilend wirksamen Fläche erfolgen, wobei im letzteren Fall Augenmerk darauf zu legen ist, keine weiteren Störreflexionen zu erhalten. Im Prinzip wären neben physikalischen auch geometrische Strahlteiler zum Aufteilen des Sendestrahls denkbar.

Eine weitere Ausbildung der Erfindung sieht einen keilförmig ausgebildeten Strahlteiler vor. Dabei sind die Eintrittsfläche und die Austrittsfläche des Strahlteilers in einem spitzen Winkel zueinander ausgerichtet. Durch die Keilform können durch Reflexionen an der Eintritts- bzw. Austrittsfläche bedingte Interferenzen zuverlässig vermieden werden. Die Einfallswinkel der Strahlen auf die Ein- bzw. Austrittsfläche sollten zudem so gewählt werden, dass die daran reflektierten Strahlanteile nicht in den Sender zurückgeführt werden und auf diese Weise einen unerwünschten Resonatorspiegel bilden.

Die jeweils gewählten Einfallswinkel des Sendestrahls bzw. Messstrahls auf die Ein- bzw. Austrittsfläche des Strahlteilers ist neben den geometrischen Gegebenheiten des Entfernungsmessgeräts, der Polarisationscharakteristik des erzeugten Sendestrahls der Lichtquelle, dem Material des Strahlteilers auch von den reflexionsverstärkenden bzw. abschwächenden Vergütungen der Ein- bzw. Austrittsfläche und kann von einem Fachmann, abhängig von der jeweiligen Anwendung, bestimmt werden.

Als Material für den Strahlteiler eignet sich beispielsweise optisches Glas, da die Transmissions- und Reflexionseigenschaften hinlänglich bekannt sind, dieses Material gegenüber den Strahlen der gewöhnlich verwendeten Diodenlaser weitgehend unempfindlich ist und es günstige mechanische und thermische Eigenschaften aufweist.

Auch durch eine geeignete Vergütung der Ein- bzw. Austrittsfläche des Strahlteilers können Interferenzen vermieden werden. Entsprechend der jeweiligen optischen Problemstellung kann beispielsweise die Eintrittsfläche eine stärker reflektierende Vergütung aufweisen als die Austrittsfläche. Mit Hilfe aufwändigerer Vergütungen, die beispielsweise Goldbedampfungen aufweisen, ist es auch möglich, die Strahlen auch bei grösseren Einfallswinkeln weitgehend unabhängig vom Polarisationszustand der auftreffenden Strahlen zu reflektieren. Damit können grössere Einfallswinkel ohne Einbussen in der erzielbaren Genauigkeit gewählt werden.

Die Güte des Referenzstrahls kann noch dadurch verbessert werden, dass wenigstens eine der beiden optischen Grenzflächen mit einer Vergütungsschicht und/oder mit einer ihre Reflexionseigenschaften erhöhenden Vergütung versehen ist, um dadurch Interferenzen zu unterbinden.

Nachstehend soll die Erfindung anhand der in den Figuren der Zeichnung dargestellten Ausführungsvarianten rein beispielhaft näher erörtert werden. Gleiche Teile in unterschiedlichen Ausführungsbeispielen, welche dieselben Funktionen ausüben, sind nachstehend mit gleichen Bezeichnungen und Bezugszeichen versehen. Es zeigen:
- Figur 1: eine schematische Darstellung eines Ausführungsbeispiels eines erfindungsgemässen Entfernungsmessgeräts;
- Figur 2: eine Detailansicht eines Ausführungsbeispiels eines Strahlteilers und einer Referenzstrecke gemäss der Erfindung;
- Figur 3: eine Detailansicht eines erfindungsgemässen Sende- Empfangs-Durchtrittsfensters und
- Figur 4: eine Darstellung des Reflexionsvermögens einer Glasoberfläche für senkrecht oder parallel polarisiertes Licht in Abhängigkeit vom Einfallswinkels.

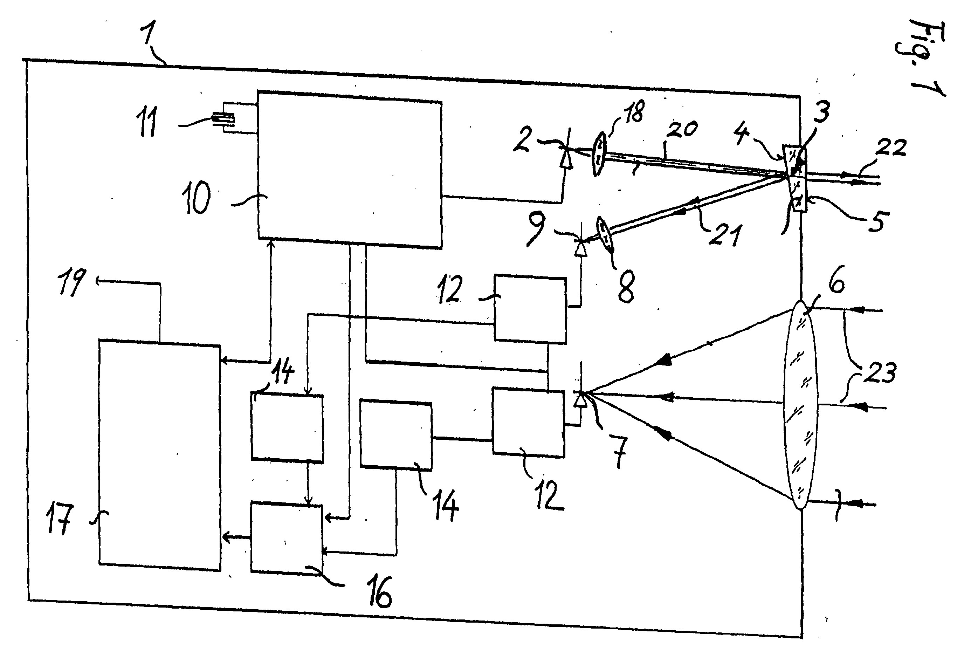

Fig. 1 zeigt ein erstes Ausführungsbeispiel eines erfindungsgemässen Entfernungsmessgeräts. Das Entfernungsmessgerät weist ein Gerätegehäuse 1 auf, das seinerseits einen als Durchtrittsfenster ausgebildeten Strahlteiler 3 und eine Empfangsoptik 6 aufweist. Innerhalb des Gerätegehäuses 1 sind hier eine Lichtquelle 2, ein Messempfänger 7, ein Referenzempfänger 9, eine Abbildungsoptik 8, eine Kollimationsoptik 18, zwei Signalumformeinrichtungen 12, zwei Niederfrequenzfilter 14, ein Analog/Digital-Wandler 16 ein Frequenzsythesizer 10, ein Referenzquarz 11 und eine Auswerteeinheit 17 angeordnet.

Der Strahlteiler 3 weist eine dem Innerem des Gerätegehäuses 1 zugewandte Eintrittsfläche 4 und eine dem Äussern des Gerätegehäuses zugewandte Austrittsfläche 5 auf. In diesem Ausführungsbeispiel sind die strahlteilend wirksam ausgebildete Eintrittsfläche 4 und die Austrittsfläche 5 in einem spitzen Winkel gegeneinander ausgerichtet. Dabei ist die Eintrittsfläche 4 gegenüber der Senkrechten auf den einfallenden Sendestrahl 20 um wenige Grad geneigt angeordnet. Die Austrittsfläche 5 schliesst mit der Strahlachse des an der Eintrittsfläche gebrochenen Sendestrahls 20 einen Winkel kleiner 90° ein. So hat sich bei der Realisierung beispielsweise ein Winkel zwischen 85° und etwa 89° als geeignet erwiesen. Dieser Bereich kann aber, abhängig von der jeweiligen Anwendung, auch noch kleiner Werte annehmen. Damit wird verhindert, dass an der Austrittsfläche 5 reflektierte Strahlteile zurück in die Lichtquelle 2 reflektiert werden und die Wirkung eines externen Resonators hervorgerufen wird.

Die hier als Laserdiode ausgebildete Lichtquelle 2 erzeugt einen von der Kollimationsoptik 18 kollimierten Sendestrahl 20. Solche Sendestrahlen weisen insbesondere für handgehaltene Entfernungsmessgeräte Licht im sichtbaren Wellenlängenbereich auf.

Der Sendestrahl 20 fällt unter einem Winkel kleiner 45° auf die Eintrittsfläche 4 ein und wird in einen Referenzstrahl 21 und in einen auf ein in Figur 1 nicht dargestelltes Objekt gerichteten Messstrahl 22 aufgeteilt. Bei der Realisierung hat sich ein Intensitätsverhältnis des Referenzstrahls 21 zum gerichteten Messstrahls 22 von beispielsweise grösser 1:20 als geeignet erwiesen. Der durch den Strahlteiler 3 hindurchtretende, auf das Objekt gerichtete Messstrahl 22 wird an diesem gestreut bzw. gerichtet reflektiert. Der gestreut bzw. gerichtet reflektierte Messstrahl 23 wird von der Empfangsoptik 6 auf dem Messempfänger 7 abgebildet und von diesem in ein elektrisches, dem reflektierten Messstrahl 23 zugeordnetes Empfangssignal umgewandelt.

Der am Strahlteiler 3 reflektierte, auf den Referenzempfänger 9 gerichtete Referenzstrahl 21 wird von der Abbildungsoptik 8 auf den Referenzempfänger 9 abgebildet und von diesem in ein elektrisches, dem Referenzstrahl 21 zugeordnetes Empfangssignal umgewandelt. Referenzempfänger und Messempfänger können baugleich ausgebildet sein und eine PIN- oder eine Avalanche-Fotodiode aufweisen.

Eine vom Referenzstrahl 21 durchlaufene, direkte Referenzstrecke, die sich vom Strahlteiler 3 direkt - ohne weitere strahlfaltende, optische Elemente - zum Referenzempfänger 9 erstrecken kann und eine vorgegebene Länge aufweist, dient zur Bestimmung der relativen Phasenlage des dem reflektierten Messstrahl 23 zugeordneten Empfangssignal.

Die Intensität des von der Lichtquelle 2 erzeugten Sendestrahls 20 weist eine hochfrequente Modulationsfrequenz auf, die von dem Frequenzsynthesizer 10 bereitgestellt wird, der seinerseits von dem Referenzquarz 11 angesteuert wird. Die hochfrequenten, dem Referenz- bzw. dem reflektierten Messstrahl 21, 23 zugeordneten Empfängersignale werden von den zwei Signalumformeinrichtungen 12, die vom Frequenzsynthesizer 10 mit einer fast gleich hohen Steuerfrequenz versorgt werden, in niederfrequente, dem Referenz- bzw. dem reflektierten Messstrahl 21, 23 zugeordnete Messsignale heruntergemischt.

Die am Ausgang der beiden Signalumformeinrichtungen 12 anliegenden Messsignale werden mit Hilfe von zwei Niederfrequenzfiltern 14 von den hochfrequenten Signalanteilen gesäubert. Zu diesem Zweck können beispielsweise Anti-Aliasingfilter eingesetzt werden. Die gefilterten und anschliessend verstärkten Messsignale werden in einem Analog/Digital-Wandler 16 digitalisiert und in einer digitalen Auswerteeinheit 17 hinsichtlich ihrer Phasenlage ausgewertet. Aus deren relativen Phasenlage wird schliesslich die Entfernung des Objekts vom Entfernungsmesser bestimmt. Diese wird dann in Form eines Messwertsignals 19 an eine in Figur 1 nicht dargestellte Ausgabeeinheit, beispielsweise eine Anzeigeeinrichtung, weitergeleitet.

Bei einem erfindungsgemässen Entfernungsmessgerät muss allerdings der Empfang des reflektierten Messstrahls und des Referenzstrahls weder gleichzeitig noch über zwei jeweils einem Strahl zugeordnete Empfänger erfolgen. So können Ausführungsvarianten eines erfindungsgemässen Entfernungsmessgeräts genauso gut einen sequentiellen Empfang der beiden Strahlen vorsehen. Die den beiden Strahlen zugeordneten Messsignale können dann in an sich bekannter Weise sequentiell gefiltert, digitalisiert und ausgewertet werden. Auch sind Ausführungsvarianten möglich, die einen Empfang der reflektierten Messstrahlung und der Referenzstrahlung über denselben Empfänger vorsehen. Dazu sind im Strahlengang des reflektierten Messstrahls und des Referenzstrahls - beispielsweise motorisch gekoppelte - Blenden angeordnet, die entweder den reflektierten Messstrahl ausblenden und den Referenzstrahl zum Empfänger durchlassen oder umgekehrt. Die Umformung in die Empfangssignale, das Heruntermischen auf die zugeordneten Messsignale, die Filterung, die Digitalisierung und die Auswertung der Messsignale kann ebenfalls sequentiell erfolgen.

Im Gegensatz zu Entfernungsmessgeräten des Stands der Technik weist ein erfindungsgemässes Entfernungsgerät für die Aufteilung des Sendestrahls 20 in den Referenzstrahls 21 und in den gerichteten Messstrahls 22 kein ausschliesslich für diese Aufteilung vorgesehenes, optisches Element, beispielsweise eine Teilerplatte, auf. Gemäss der Erfindung erfolgt diese Aufteilung unmittelbar am als Durchtrittsfenster ausgebildeten Strahlteiler 3, indem die beispielsweise an der Eintrittsfläche 4 des Strahlteilers 3 auftretenden Reflexionen in Richtung des Referenzempfängers 9 abgelenkt werden. Dieser Strahlteiler 3 bildet auch gleichzeitig ein Abschlusselement, welches das Innere des Gerätegehäuses 1 gegenüber der Umwelt abschliesst.

Figur 2 zeigt eine Detailansicht eines Ausführungsbeispiels mit einer direkten Referenzstrecke gemäss der Erfindung. Eine solche direkte Referenzstrecke führt von dem Strahlteiler 3, an dem der Sendestrahl 20 in den Referenzstrahl 21 und den auf das Objekt gerichteten Messstrahl 22 aufgeteilt wird, unmittelbar zu der dem Referenzempfänger 9 zugeordneten Abbildungsoptik 8.

Der erfindungsgemässe Strahlteiler 3 ist im Gegensatz zu dem in Figur 1 dargestellten Strahlteiler als Teilerplatte mit im wesentlichen planparallelen Ein- bzw. Austrittsflächen 4,5 ausgebildet. Der von der Lichtquelle 2 erzeugte Sendestrahl 20 fällt unter einem spitzen Einfallswinkel auf die Eintrittsfläche 4 ein, der in einer Ausbildung gemäss diesem Ausführungsbeispiel in etwa zwischen 5° und 10° betragen kann.

Im Gegensatz zum Stand der Technik schliesst bei einer erfindungsgemässen, direkten Referenzstrecke der Referenzstrahl 21, der durch den sich permanent im Strahlengang befindenden Strahlteiler 3 vom Sendestrahl 20 abgezweigt wurde, mit diesem einen wesentlich kleineren Winkel auf als mit dem auf das Objekt gerichteten Messstrahl 22.

Grundsätzlich könnten direkte Referenzstrecken vorgesehen werden, unabhängig davon, ob der Strahlteiler zugleich auch das Durchtrittsfenster des Gerätegehäuses bildet. So wäre es zum Beispiel durchaus denkbar, eine direkte Referenzstrecke zu realisieren, die sich zwischen dem Referenzempfänger einer separaten Teilerplatte erstreckt, welche Teilerplatte - gegebenenfalls - in der Nähe eines separaten Durchtrittsfensters positioniert ist.

Der Strahlteiler 3 des Ausführungsbeispiels der Figur 2 bildet erfindungsgemäss auch das Durchtrittsfenster und ist hier gegenüber dem Verlauf der Wandung des Gerätegehäuses 1 leicht schräg eingebaut ist. Durch die geneigte Eintrittsfläche 4 wird der aus dem einfallenden Sendestrahl 20 abgezweigte Referenzstrahl 21 direkt zu einer Sammeloptik 8 und einem Referenzempfänger 9 abgelenkt. Dabei kann die Sammeloptik 8 über ein Diodengehäuse mit dem Referenzempfänger 9 verbunden sein. Die Strecke der Eintrittsfläche 4 bis zum Referenzempfänger 9 bildet eine direkte Referenzstrecke gemäss der Erfindung.

Als Material für diesen Strahlteiler 3 eignet sich optisches Glas, da es gegenüber sichtbarem Laserlicht unempfindlich und gut zu bearbeiten ist. Zur Vermeidung von Interferenzen kann wenigstens die Ein- bzw. Austrittsfläche 4, 5 vergütet sein. Auch besteht die Möglichkeit, eine dieser Flächen des Strahlteilers 3 mit einer stärker reflektierenden Vergütung zu versehen. Durch Aufbringen von speziellen, weniger polarisationsabhängigen Vergütungen sind auch grössere Einfallswinkel realisierbar.

Figur 3 zeigt eine Detailansicht eines weiteren Ausführungsbeispiels eines erfindungsgemässen Entfernungsmessgeräts mit einem Strahlteiler 3 für das Aufteilen des von der Lichtquelle 2 erzeugten Sendestrahls 20, der gemäss der Erfindung als Durchtrittsfenster für den auf das Objekt gerichteten Messstrahl 22 ausgebildet ist. Im Gegensatz zum Durchtrittsfenster der Figuren 1 und 2 ist das Sende-Empfangs-Durchtrittsfenster 24 der Figur 3 einteilig mit der Empfangsoptik 6 für das Abbilden des reflektierten Messstrahls 23 verbunden.

Das hier im Schnitt dargestellte, einteilige Sende-Empfangs-Durchtrittsfenster 24 ist einstückig ausgebildet. Das Sende-Empfangs-Durchtrittsfenster 24 weist über seine halbe Breite einen Aufnahmespalt auf. In diesen Aufnahmespalt ist eine in Form einer Trennwand ausgebildete, optische Übersprechbarriere 25 eingefügt. Diese Trennwand hindert Strahlanteile des Sendestrahls 20 bzw. des gerichteten Messstrahls 22 daran auf den Messempfänger 7 zu gelangen. In an sich bekannter Weise könnten auch in das Sende-Empfangs-Durchtrittsfenster 24 Rillen oder Kerben eingelassen sein, die gegebenenfalls eine aufgerauhte Oberfläche aufweisen bzw. mit einer schwarzen Schicht versehen sind.

In diesem Ausführungsbeispiel weist das Sende-Empfangs-Durchtrittsfenster 24 eine im wesentlichen plankonvexe Aussenkontur auf. Erfolgt die Herstellung durch Blankpressen von Glas oder Spritzen von Kunststoff so kann eine plankonvexe Form kostenseitig Vorteile bringen. Bei einem solchen Herstellverfahren könnte der Aufnahmespalt ohne zusätzliche Herstellschritte realisiert werden.

Es wäre aber auch denkbar, dass ein Sende-Empfangs-Durchtrittsfenster beispielsweise zwei über eine gemeinsame Fassung, gegebenenfalls aus lichtundurchlässigem Material, zusammengefasste Glasteile aufweist.

Figur 4 zeigt, wie weiter oben bereits beschrieben, die Abbildung 2.28 auf Seite 65 aus "Technische Optik in der Praxis / Gerd Litfin: Springer Verlag (ISBN 3-540-60613-0 Springer Verlag Berlin Heidelberg New York)". Darin ist der Betrag des Intensitäts-Reflexionsvermögens (R) und des Amplituden-Reflexionsvermögen (r) beim Übergang von Luft nach Glas mit einem Brechungsindex von 1,5 für linear polarisiertes Licht, dessen Polarisationsrichtung parallel (rₚ, Rₚ) bzw. senkrecht (rₛ, Rₛ) zur Einfallsebene steht, in Abhängigkeit des Einfallswinkels (°) dargestellt. Das Intensitäts-Reflexionsvermögens (R) entspricht dabei dem quadrierten Amplituden-Reflexionsvermögen (r). Bei diesem Beispiel liegt bei einem spitzen Einfallswinkel (°) kleiner als 12° kein nennenswerter Unterschied zwischen dem Reflexionsvermögen von senkrechten und parallel polarisiertem Licht mehr vor.

## Patentansprüche

1. Entfernungsmessgerät zum elektrooptischen Bestimmen der Entfernung eines Objektes vom Entfernungsmessgerät mit
- einer Lichtquelle (2) zum Erzeugen eines Sendestrahls (20),
- einem Strahlteiler (3) zum Aufteilen des Sendestrahls (20) in einen Referenzstrahl (21) und in einen auf das Objekt gerichteten Messstrahl (22),
- einem Referenzempfänger (9) zum Empfangen des Referenzstrahls (21), wobei zwischen dem Strahlteiler (3) und dem Referenzempfänger (9) ein Referenzstrahlgang mit einer Referenzstrecke bekannter Länge definiert ist,
- einem Messempfänger (7) zum Empfangen des am Objekt gestreut oder gerichtet reflektierten Messstrahls (23),
- einer Auswerteeinheit (17) zum Bestimmen der Entfernung aus im Messempfänger (7) verfügbaren, dem reflektierten Messstrahl (23) zugeordneten Messsignalen und im Referenzempfänger (9) verfügbaren, dem Referenzstrahl zugeordneten Referenzmesssignalen, sodass auf die Entfernungsmessgenauigkeit negativ wirkende Einflüsse von instabilen Verzögerungen in der Lichtquelle verringerbar sind,
- einem Gerätegehäuse (1), in dem die Lichtquelle (2), der wenigstens eine Empfänger (7, 9) und die Auswerteeinheit (17) angeordnet sind, mit einem Durchtrittsfenster für den auf das Objekt gerichteten Messstrahl (22) und einer Empfangsoptik (6) für den reflektierten Messstrahl (23),
**dadurch gekennzeichnet, dass**
der Strahlteiler (3) das Durchtrittsfenster bildet.

2. Entfernungsmessgerät nach Anspruch 1,
**dadurch gekennzeichnet, dass**
eine dem Innern des Gerätegehäuses (1) zugewandte Eintrittsfläche (4) des Strahlteilers (3) mit der Strahlachse des Sendestrahls (20) einen Winkel grösser 45°, insbesondere zwischen 70° und 85°, bildet.

3. Entfernungsmessgerät nach Anspruch 1 oder 2,
**dadurch gekennzeichnet, dass**
die Austrittsfläche (5) des Strahlteilers (3) mit der Strahlachse des an der Eintrittsfläche (4) gebrochenen Sendestrahls (20) einen Winkel kleiner 90°, gegebenenfalls zwischen 85° und 89°, bildet.

4. Entfernungsmessgerät nach einem der vorhergehenden Ansprüche,
**dadurch gekennzeichnet, dass**
die Eintrittsfläche (4) als strahlteilend wirksame Fläche ausgebildet, gegebenenfalls vergütet, ist.

5. Entfernungsmessgerät nach einem der vorhergehenden Ansprüche,
**dadurch gekennzeichnet, dass**
die Austrittsfläche (5) als strahlteilend wirksame Fläche ausgebildet, gegebenenfalls vergütet, ist.

6. Entfernungsmessgerät nach einem der vorhergehenden Ansprüche,
**dadurch gekennzeichnet, dass**
der Referenzstrahl (21) und der auf das Objekt gerichtete Messstrahl (22) im Wesentlichen den gleichen Anteil an polarisiertem Licht aufweisen.

7. Entfernungsmessgerät nach einem der vorhergehenden Ansprüche,
**dadurch gekennzeichnet, dass**
der Sendestrahl (20) periodisch intensitätsmoduliert ist und die Auswerteeinheit (17) die Phasenlage des dem reflektierten Messstrahl (23) zugeordneten Messsignals relativ zur Phasenlage des dem Referenzstrahl (21) zugeordneten Messsignals bestimmt.

8. Entfernungsmessgerät nach einem der vorhergehenden Ansprüche,
**dadurch gekennzeichnet, dass**
der Strahlteiler (3) derart ausgebildet und positioniert ist, dass der Referenzstrahl (21) mit dem Sendestrahl (20) einen wesentlich kleineren Winkel als mit dem auf das Objekt gerichteten Messstrahl (22) einschliesst.

9. Entfernungsmessgerät nach einem der vorhergehenden Ansprüche,
**dadurch gekennzeichnet, dass**
die Referenzstrecke keine strahlfaltenden, optischen Elemente aufweist.

10. Entfernungsmessgerät nach einem der vorhergehenden Ansprüche,
**dadurch gekennzeichnet, dass**
der Strahlteiler (3) derart ausgebildet und positioniert ist, dass der auf das Objekt gerichtete Messstrahl (22) wenigstens die zwanzigfache Intensität des Referenzstrahls (21) aufweist.

11. Entfernungsmessgerät nach einem der vorhergehenden Ansprüche,
**dadurch gekennzeichnet, dass**
der auf das Objekt gerichtete Messstrahl (22) im sichtbaren Wellenlängenbereich liegt.

12. Entfernungsmessgerät nach einem der vorhergehenden Ansprüche,
**dadurch gekennzeichnet, dass**
das den Strahlteiler bildende Durchtrittsfenster (24) und die Empfangsoptik (6) einteilig miteinander verbunden sind.

13. Entfernungsmessgerät nach einem der vorhergehenden Ansprüche,
**gekennzeichnet durch**
eine optische Übersprechbarriere (25), die derart zwischen dem Referenzstrahlgang und einem zwischen der Empfangsoptik (6) und dem Messempfänger (7) definierten Strahlgang angeordnet und ausgebildet ist, dass ein Auftreffen sowohl von Strahlanteilen des Sendestrahls (20) als auch des gerichteten Messstrahls (22) auf dem Messempfänger (7) verhindert wird.

## Claims

1. Distance-measuring device for electro-optical determination of the distance of an object from the distance-measuring device, comprising
- a light source (2) for generating a transmitted beam (20),
- a beam splitter (3) for splitting the transmitted beam (20) into a reference beam (21) and into a measuring beam (22) directed onto the object,
- a reference receiver (9) for receiving the reference beam (21), a reference beam path with a reference distance of known length being defined between the beam splitter (3) and the reference receiver (9),
- a measuring receiver (7) for receiving the measuring beam (23) reflected by the object in a diffuse or directed manner,
- an evaluation unit (17) for determining the distance from measured signals available in the measuring receiver (7) and coordinated with the reflected measuring beam (23) and reference signals available in the reference receiver (9) and coordinated with the reference beam, so that influences of unstable delays in the light source which have an adverse affect on the accuracy of distance measurement can be reduced,
- a device housing (1) in which the light source (2), the at least one receiver (7, 9) and the evaluation unit (17) are arranged, having a passage for the measuring beam (22) directed onto the object and a receiving optical system (6) for the reflected measuring beam (23),
**characterized in that** the beam splitter (3) forms the passage.

2. Distance-measuring device according to Claim 1, **characterized in that** an entry surface (4) of the beam splitter (3) which faces the interior of the device housing (1) makes an angle greater than 45°, in particular between 70° and 85°, with the beam axis of the transmitted beam (20).

3. Distance-measuring device according to Claim 1 or 2, **characterized in that** the exit surface (5) of the beam splitter (3) makes an angle of less than 90°, optionally between 85° and 89°, with the beam axis of the transmitted beam (20) refracted at the entry surface (4).

4. Distance-measuring device according to any of the preceding claims, **characterized in that** the entry surface (4) is formed as a beam-splitting surface and is optionally coated.

5. Distance-measuring device according to any of the preceding claims, **characterized in that** the exit surface (5) is formed as a beam-splitting surface and is optionally coated.

6. Distance-measuring device according to any of the preceding claims, **characterized in that** the reference beam (21) and the measuring beam (22) directed onto the object have substantially the same proportion of polarized light.

7. Distance-measuring device according to any of the preceding claims, **characterized in that** the transmitted beam (20) is periodically intensity-modulated, and the evaluation unit (17) determines the phase position of the measured signal coordinated with the reflected measuring beam (23) relative to the phase position of the measured signal coordinated with the reference beam (21).

8. Distance-measuring device according to any of the preceding claims, **characterized in that** the beam splitter (3) is formed and positioned in such a way that the reference beam (21) makes a substantially smaller angle with the transmitted beam (20) than with the measuring beam (22) directed onto the object.

9. Distance-measuring device according to any of the preceding claims, **characterized in that** the reference distance comprises no beam-folding, optical elements.

10. Distance-measuring device according to any of the preceding claims, **characterized in that** the beam splitter (3) is formed and positioned in such a way that the measuring beam (22) directed onto the object has at least twenty times the intensity of the reference beam (21).

11. Distance-measuring device according to any of the preceding claims, **characterized in that** the measuring beam (22) directed onto the object is in the visible wavelength range.

12. Distance-measuring device according to any of the preceding claims, **characterized in that** the passage (24) forming the beam splitter and the receiving optical system (6) are connected to one another to form one part.

13. Distance-measuring device according to any of the preceding claims, **characterized by** an optical crosstalk barrier (25) which is arranged and formed between the reference beam path and a beam path defined between the receiving optical system (6) and the measuring receiver (7) in such a way that incidence of beam components of both the transmitted beam (20) and the directed measuring beam (22) on the measuring receiver (7) is prevented.

## Revendications

1. Dispositif de mesure de distance, pour la détermination électro-optique de la distance d'un objet par rapport au dispositif de mesure de distance, comprenant :
- une source de lumière (2), pour produire un rayon d'émission (20),
- un diviseur de rayon (3), pour diviser le rayon d'émission (20) en un rayon de référence (21) et un rayon de mesure (22) dirigé sur l'objet,
- un récepteur de référence (9), pour recevoir le rayon de référence (21), entre le diviseur de rayon (3) et le récepteur de référence (9) étant défini un chemin de rayon de référence ayant un trajet de référence de longueur connue,
- un récepteur de mesure (7), pour recevoir le rayon de mesure (23), réfléchi de manière diffusée ou dirigée sur l'objet,
- une unité d'évaluation (17), pour déterminer la distance à partir de signaux de mesure disponibles dans le récepteur de mesure (7), associés au rayon de mesure (23) réfléchi, et de signaux de mesure de référence, disponibles dans le récepteur de référence (9), associés au rayon de référence, de manière que des influences, agissant négativement sur la précision de la mesure de distance, imputables à des retardements instables dans la source de lumière, puissent être diminuées,
- un boîtier d'appareil (1), dans lequel sont disposés la source de lumière (2), le au moins un récepteur (7, 9) et l'unité d'évaluation (17), avec une fenêtre de passage pour le rayon de mesure (22) orienté sur l'objet et une optique de réception (6) pour le rayon de mesure (23) réfléchi,
**caractérisé en ce que**
le diviseur de rayon (3) forme la fenêtre de passage.

2. Dispositif de mesure de distance selon la revendication 1,
**caractérisé en ce qu'**
une face d'entrée (4), tournée vers l'intérieur du boîtier d'appareil (1), du diviseur de rayon (3) forme, avec l'axe de rayon du rayon d'émission (20), un angle supérieur à 45°, en particulier compris entre 70° et 85°.

3. Dispositif de mesure de distance selon la revendication 1 ou 2,
**caractérisé en ce que**
la face de sortie (5) du diviseur de rayon (3) forme, avec l'axe de rayon du rayon d'émission (20) réfracté sur la surface d'entrée (4), un angle inférieur à 90°, en particulier compris entre 85° et 89°.

4. Dispositif de mesure de distance selon l'une des revendications précédentes,
**caractérisé en ce que**
la face d'entrée (4) est réalisée sous forme de face agissant en tant que diviseuse de rayon, le cas échéant étant antireflet.

5. Dispositif de mesure de distance selon l'une des revendications précédentes,
**caractérisé en ce que**
la face de sortie (5) est réalisée sous forme de face agissant en tant que diviseuse de rayon, le cas échéant étant antireflet.

6. Dispositif de mesure de distance selon l'une des revendications précédentes,
**caractérisé en ce que**
le rayon de référence (21) et le rayon de mesure (22) orienté sur l'objet présentent sensiblement la même proportion de lumière polarisée.

7. Dispositif de mesure de distance selon l'une des revendications précédentes,
**caractérisé en ce que**
le rayon d'émission (20) est soumis à une modulation d'intensité périodique, et l'unité d'évaluation (17) détermine la position en phase du signal de mesure, associé au rayon de mesure (23) réfléchi, par rapport à la position en phase du signal de mesure associé au rayon de référence (21).

8. Dispositif de mesure de distance selon l'une des revendications précédentes,
**caractérisé en ce que**
le diviseur de rayon (3) est réalisé et positionné de manière que le rayon de référence (21) fasse, avec le rayon d'émission (20), un angle notablement plus petit qu'avec le rayon de mesure (22) orienté sur l'objet.

9. Dispositif de mesure de distance selon l'une des revendications précédentes,
**caractérisé en ce que**
le trajet de référence ne présente aucun élément optique effectuant une convolution des rayons.

10. Dispositif de mesure de distance selon l'une des revendications précédentes,
**caractérisé en ce que**
le diviseur de rayon (3) est réalisé et positionné de manière que le rayon de mesure (22) orienté sur l'objet présente au moins vingt fois l'intensité du rayon de référence (21).

11. Dispositif de mesure de distance selon l'une des revendications précédentes,
**caractérisé en ce que**
le rayon de mesure (22) orienté sur l'objet est dans la région de longueurs d'ondes visible.

12. Dispositif de mesure de distance selon l'une des revendications précédentes,
**caractérisé en ce que**
la fenêtre de passage (24) formant le diviseur de rayon et l'optique de réception (6) sont reliées ensemble d'une seule pièce.

13. Dispositif de mesure de distance selon l'une des revendications précédentes,
**caractérisé par**
une barrière de diaphonie (25) optique, disposée entre le chemin de rayon de référence et un chemin de rayon défini entre l'optique de réception (6) et le récepteur de mesure (7), et réalisée de manière que tout impact sur le récepteur de mesure (7), tant de fractions de rayon du rayon d'émission (20) qu'également du rayon de mesure (22) orienté, soit empêché.
